# EUROPEAN PATENT SPECIFICATION

(11) **EP 2 043 352 B1**
(45) Date of publication and mention of the grant of the patent: **12.08.2015**
(21) Application number: 08165286.9
(22) Date of filing: 26.09.2008
(51) Int. Cl.: H04N 1/60, H04N 1/56

(54) **Image forming system, image processing apparatus and image processing method**
Bilderzeugungssystem, Bildverarbeitungsvorrichtung und Bildverarbeitungsverfahren
Système de formation d'image, appareil de traitement d'image et procédé de traitement d'image

(30) Priority: 28.09.2007 JP 2007253509; 19.08.2008 JP 2008210955
(43) Date of publication of application: 01.04.2009
(73) Proprietor: Oki Data Corporation, Tokyo 108-8551 (JP)
(72) Inventor: Iguchi Satoru, Tokyo Fukushima 108-8551 (JP); Yamanouchi, Katsuyoshi, Tokyo Fukushima 108-8551 (JP); Yamada, Kazuyuki, Tokyo Fukushima 108-8551 (JP)
(74) Representative: Piotrowicz, Pawel Jan Andrzej

(56) References cited:
- EP-A- 1 515 263
- WO-A-2005/025201
- WO-A1-01/26034
- US-A1- 2004 100 658
- MOIRA C. NORRIE, BEAT SIGNER, NADIR WEIBEL: "Print-n-Link: Weaving the paper web" ACM, 2 PENN PLAZA, SUITE 701 - NEW YORK USA, 13 October 2006 (2006-10-13), pages 34-43, XP040048760 Proceedings of the 2006 ACM Symposium on Document Engineering
- ARNOLD N. PEARS, CARL ERICKSON: "Enriching online learning resources with "explanograms"" ACM, 2 PENN PLAZA, SUITE 701 - NEW YORK USA, vol. 49, 2003, pages 261-266, XP040172725 ACM International Conference Proceeding Series
- PETER KAURANEN: "The paper pen - why light scattering matters"[Online] XP002531674 internet abstract Retrieved from the Internet: URL:http://www.acreo.se/upload/Publication s/Proceedings/OE00/00-KAURANEN.pdf> [retrieved on 2009-06-08]

## Description

### FIELD OF THE INVENTION

The invention relates to an image forming system in which a color image processing apparatus and a color image forming apparatus are connected; relates to a color image processing apparatus connected with a color image forming apparatus; and relates to an image processing method.

### BACKGROUND OF THE INVENTION

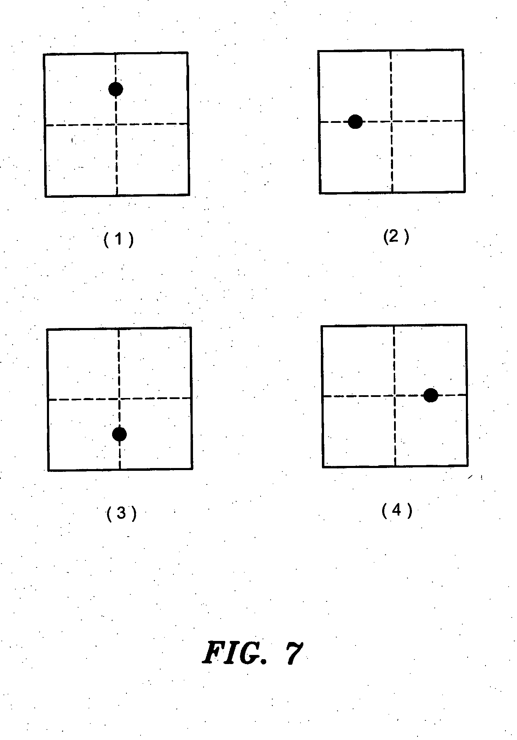

Fig. 7 is a block diagram showing a structure of a conventional image forming system to perform an Anoto print (I).

Conventionally, as shown by Fig. 7, an Anoto print is performed by using an image forming system in which a host computer 70 such as personal computer (PC) and a printer 80 are connected via cable (not shown). That is, in the conventional image forming system, the host computer 70 sends image data composed of (R, G, B) values and sends Anoto pattern data to the printer 80 via the cable; the printer 80 performs a complement change (C=1-R, M=1-G, Y=1-B) with respect to the image data composed of the (R, G, B) values (R (Red), G (Green), B (Blue)) so as to generate image data that is composed of (C, M, Y, K (K=0)) values. Then, the printer 80 performs a layer thickness control, compounds the generated image data composed of the (C, M, Y, K (K=0)) values with the Anoto pattern data sent from the host computer 70 as an image; and prints the compounded image data of the image onto a print medium. Regarding the expression of K=0 in (C, M, Y, K (K=0)) described above, it indicates that there is no color "K".

On the one hand, a coloring of image displayed on a displayer of the host computer 70, is obtained through basing the (R, G, B) values of image data upon a standard RGB profile (S-RGB profile). On the other hand, a coloring of image printed on the print medium by the printer 80 is obtained according to the (C, M, Y, K (K=0)) values obtained by performing a complement change with respect to the (R, G, B) values of image data sent from the host computer 70. Thereby, even if using the identical image data, the coloring of the image displayed on displayer in host computer is different from the coloring of the image printed on the print medium printed by printer.

Though the coloring of the image displayed on displayer in host computer is different from the coloring of the image printed on the print medium printed by printer, as a wish of user, it is desirable to make both the coloring of the image displayed on displayer in host computer and the coloring of the image printed on the print medium printed by printer become to coincide.

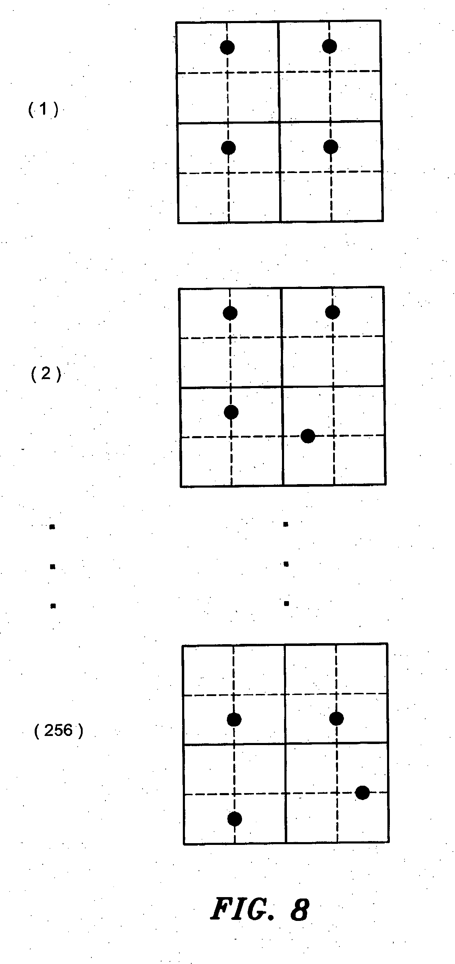

Fig. 8 is a block diagram showing a structure of a conventional image forming system to perform an Anoto print (II).

In order to realize the wish of user, in the conventional image forming system, as shown by Fig. 8, the host computer 70 sends image data composed of (R, G, B) values and sends Anoto pattern data to the printer 80 via the cable; the printer 80 performs a complement change (C=1-R, M=1-G, Y=1-B) with respect to the image data so as to generate image data that is composed of (C, M, Y, K (K=0)) values. Next, the printer 80 changes the image data composed of (C, M, Y, K (K=0)) values into image data composed of (C, M, Y, K (K=0)) values that can make the coloring of the image printed on the print medium become approximate to the coloring of the image displayed on displayer, on the basis of a link profile 803. Then, a layer thickness control section 801 controls the (C, M, Y, K (K=0)) values of the changed image data on the basis of the link profile 803 and controls layer thicknesses of toner layers of all colors on the basis of K values of the Anoto pattern data; and a print processing section 802 performs an image compound to compound the image data composed of the (C, M, Y, K (K=0)) values changed on the basis of the link profile 803 with the Anoto pattern data only composed of K values, and prints the compounded image onto print medium (for example, refer to the following patent document 1). Thus, the image printed on the print medium has an approximate coloring to the coloring of the image displayed on displayer, and an image of the Anoto pattern data is printed on the print medium.

The patent document 1 is Japan patent publication 2005-169798.

However, in the image forming system enabling the coloring of the image printed on the print medium to be approximate to the coloring of the image displayed on displayer, on the side of the printer, because it is necessary to perform complement change process, profile change process using a profile for coloring approximation (i.e. coloring approximation use profile) and layer thickness control process, to there are problems that an excessive load exists with respect to print process, and thruput concerning the print process lowers.

WO2005/025201 A2 discloses an image forming apparatus configured to convert RGB color image data to CYMK1K2 color image data, where K1, K2 correspond to black inks having different infra-red absorption properties.

US2004/0100658 A1 discloses a recording apparatus which provides a method of printing positional information and another image on the same recording medium whilst preventing degradation of recording quality. The CMY colour data being adjusted to compensate for the positional information contained in K colour data.

WO01/26034 A1 discloses a method of arranging a position code on a surface. WO01/26034 A1 discloses that dots are arranged on a surface at a nominal position but displaced from the nominal position in a plurality of directions. The resultant displacement is converted to coordinates to provide position location information. The resulting pattern is termed an Anoto pattern.

### SUMMARY OF THE INVENTION

The invention provides an image forming system comprising a color image forming apparatus and an the image processing apparatus which is connected with the color image forming apparatus, the image processing apparatus includes an image data storing section configured to store RGB color image data, a color changing section configured to change RGB color image data to CMYK(K=0) color image data having no K value, a sending section configured to send print data including the CMYK(K=0) color image data having no K value, and dot pattern data for forming a dot pattern designated by only K values, to the color image forming apparatus, the dot pattern is a dot pattern furnished in a predetermined interval with a grid shape and configured to be printed on a medium, wherein the dot pattern comprises first, second, third and fourth basic dots, each of the basic dots being located at a position that deviates slightly from a cross point of orthogonal imaginary grid lines along a longways direction or a widthways direction, and the dot pattern is configured such that an absolute position of the dot pattern on the medium is detected when a device comprising a pattern reading mechanism reads the dot pattern, the color image forming apparatus includes a printing section configured to receive the print data from the image processing apparatus, wherein the printing section is configured to print the CMYK(K=0) color image data having no K value by using C, M and Y developer and without using K developer on the medium, and to print the dot pattern designated by only K values by using K developer on the medium, the image processing apparatus further comprising a dot pattern generating section configured to store first character code data mapping the numbers 1 to 4 to respective first font data corresponding to the first, second, third or fourth basic dots, and second character code data mapping the numbers 1 to 256 to respective second font data corresponding to a combination of four dots selected from the basic dots and arranged in a 2-by-2 grid, wherein the color image forming apparatus is configured to receive the first or second font data and a predetermined combination of numerical characters encoded using the respective first or second character code data, and the numerical characters correspond to positions on the paper forming a grid, and the dot pattern is produced by mapping each of the numerical characters to the respective font data using the respective first or second character code data.

The color changing section may be configured to change RGB color image data to CMYK(K=0) color image data having no K value using a coloring approximation use profile for making a coloring of the color image when printed on print medium be approximate to a coloring of the image when displayed on a displayer.

The image forming system may be configured to permit a user selection of whether the first or second character code data is used.

The sending section may be configured to send a notification to the color image forming apparatus that the RGB color image data has been changed to CMYK(K=0) color image data, for example, by adding the notification to the print data or by sending the notification as a command to the color image forming apparatus.

The invention also provides an image forming method in an image forming system comprising a color image forming apparatus and an image processing apparatus which is connected with the color image forming apparatus, comprising steps of changing RGB color image data to CMYK(K=0) color image data having no K value, sending print data including the CMYK(K=0) color image data having no K value, and dot pattern data for forming a dot pattern designated by only K values, from the image processing apparatus to the color image forming apparatus, and printing the print data from the image processing apparatus, wherein the CMYK(K=0) color image data having no K value is printed using C, M and Y developer and without using K developer on the medium, and the dot pattern designated by only K values is printed using K developer on the medium, wherein the dot pattern data is a dot pattern furnished in a predetermined interval with a grid shape and configured to be printed on a medium, wherein the dot pattern comprises first, second, third and fourth basic dots, each of the basic dots being located at a position that deviates slightly from a cross point of orthogonal imaginary grid lines along a longways direction or a widthways direction, and the dot pattern is configured such that an absolute position of the dot pattern on the medium is detected when a device comprising a pattern reading mechanism reads the dot pattern, wherein a first character code data maps the numbers 1 to 4 to respective first font data corresponding to the first, second, third or fourth basic dots, and a second character code data maps the numbers 1 to 256 to respective second font data corresponding to a combination of four dots selected from the basic dots and arranged in a 2-by-2 grid, wherein the color image forming apparatus receives the first or second font data and a predetermined combination of numerical characters encoded using the respective first or second character code data, and the numerical characters correspond to positions on the paper forming a grid, and the dot pattern is produced by mapping each of the numerical characters to the respective font data using the respective first or second character code data

The method may comprise making a coloring of the color image printed on print medium be approximate to a coloring of an image displayed on displayer through using a previously stored color approximation use profile.

The method may comprise sending a command to avoid performance of a CMYK change process by the color image forming apparatus, when sending the print data to the color image forming apparatus.

The method may comprise receiving user selection of whether the first character code data of the second character code data is to be used

### Effect of the Invention:

According to the invention, it is possible to keep a high thruput when performing a background pattern data print (e.g. Anoto print) of the image having an approximate coloring to the coloring of the image displayed on displayer, onto print medium.

The above features of the present invention will become apparent from the following detailed description and the appended claims with reference to the accompanying drawings.

### BRIEF DESCRIPTION OF THE DRAWINGS

Fig. 1 is a block diagram showing a structure of an image forming system outside the scope of the present invention;
Fig. 2 is a flow chart showing operation of the image forming system of Fig. 1;
Fig. 3 is a block diagram showing a structure of a conventional image forming system to perform an Anoto print (I);
Fig. 4 is a block diagram showing a structure of a conventional image forming system to perform an Anoto print (II);
Fig. 5 is a block diagram showing a structure of an image forming system in an embodiment of the present invention;
Fig. 6 is a diagram showing flow of signal in the image forming system of Fig. 9;
Fig. 7 is a diagram showing basic Anoto dots;
Fig. 8 is a diagram showing combinations of basic Anoto dots;
Fig. 9A~Fig. 9B are diagrams showing Anoto pattern according to basic Anoto dots; and
Fig. 10A~Fig. 10B are diagrams showing Anoto pattern according to combinations of basic Anoto dots;

### DETAILED DESCRIPTION

An embodiment of the invention will be described in detail hereinbelow with reference to the drawings.

### <Arrangement 1>

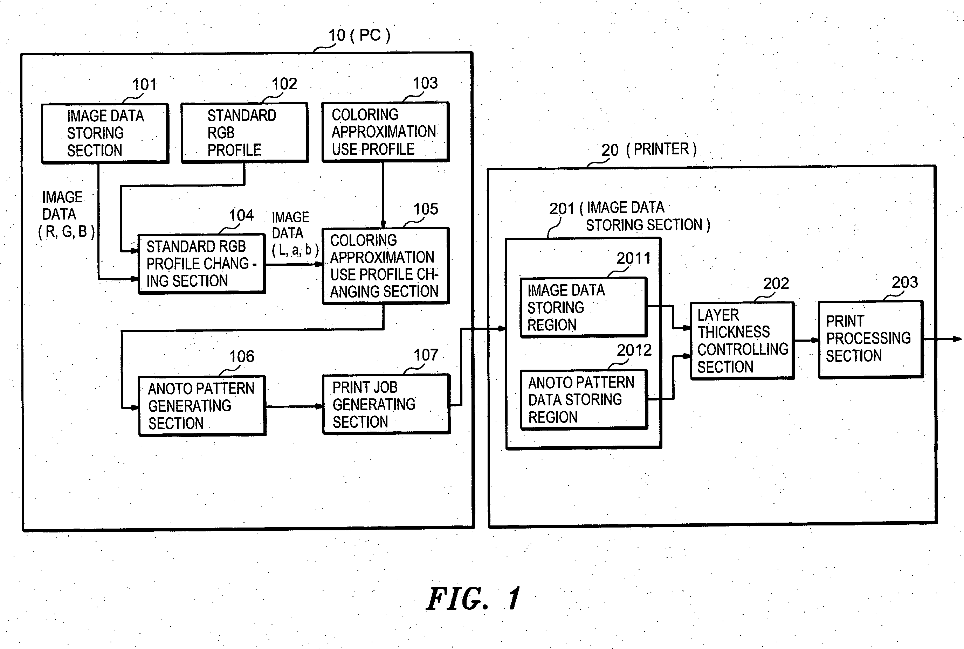

Fig. 1 is a block diagram showing a structure of an image forming system in arrangement 1, which is outside the scope of the present invention.

As shown by Fig. 1, in an image forming system of the arrangement 1, a personal computer (hereinafter: PC) 10 which serves as an color image processing apparatus and a printer 20 which serves as an color image forming apparatus are connected via cable (not shown).

The PC 10 includes an image data storing section 101, a standard RGB profile 102, a coloring approximation use profile 103, a standard RGB profile changing section 104, a coloring approximation use profile changing section 105, an Anoto pattern generating section 106 and a print job generating section 107.

The standard RGB profile changing section 104 is formed through a CPU (not shown) executes a standard RGB profile change control program stored in a ROM (not shown). The coloring approximation use profile changing section 105 is formed through the same CPU (not shown) executes a coloring approximation use profile change control program stored in the same ROM (not shown). The Anoto pattern generating section 106 is formed through the same CPU (not shown) executes an Anoto pattern generation control program stored in the same ROM (not shown). Moreover, in the standard RGB profile change control program and the coloring approximation use profile change control program, for example, there is an Acrobat Distiller to form Acrobat (it is an application name supplied by Adobe company) that is a control program for generating a PDF file. In the Anoto pattern generation control program, there is an AcrobatFDT plugged in by the Acrobat.

The image data storing section 101 stores image data read out by a scanner, image data of image to be printed by the printer 20, and the like. The image data is composed of (R, G, B) values.

The standard RGB profile 102 is used for changing the image data composed of the (R, G, B) values and stored in the image data storing section 101 into image data composed of (L, a, b) values. A data formation of the standard RGB profile 102 is in a table form. Moreover, the standard RGB profile 102 is packaged by the Acrobat Distiller.

The coloring approximation use profile 103 is a profile used to make a coloring of an image to be printed on print medium become approximate to a coloring of an image displayed on displayer; also is a file used to change the image data composed of the (L, a, b) values displayed on displayer into image data composed of (C, M, Y, K (K=0)) values to be printed on print medium. A data formation if the coloring approximation use profile 103 is in table form.

Moreover, because the printer 20 prints an image which is obtained by compounding image data with Anoto pattern data of K color (black color) when the printer 20 performs an Anoto print, the coloring approximation use profile 103 always changes the image data composed of (L, a, b) values into the image data composed of (C, M, Y, K (K=0)) values without K values (i.e. without black color). Further, the coloring approximation use profile 103 incorporates a profile generated by a profile change device or a profile generated by tool to make profile according to a request of user in the Acrobat Distiller.

The standard RGB profile changing section 104 changes the image data composed of (R, G, B) values stored in the image data storing section 101 into the image data composed of (L, a, b) values on the basis of the standard RGB profile 102, and outputs the changed image data to the coloring approximation use profile changing section 105. The image data that is changed to the image data composed of (L, a, b) values by the standard RGB profile changing section 104 is image data of an image that is displayed on displayer.

The coloring approximation use profile changing section 105 changes the image data composed of (L, a, b) values inputted from the standard RGB profile changing section 104 into image data composed of (C, M, Y, K (K=0)) values on the basis of the coloring approximation use profile 103, and stores the image data into a RAM (not shown). The image data that is changed to the (C, M, Y, K (K=0)) values from the (L, a, b) values by the coloring approximation use profile changing section 105 is image data of an image to be printed on print medium.

The Anoto pattern generating section 106 generates Anoto pattern data of an Anoto pattern image to be compounded with the image to be printed on print medium by the printer 20, and stores the Anoto pattern data into RAM, the Anoto pattern data serves as background pattern data. Anoto pattern is formed by dots, respective dots are respectively formed by dot patterns that are more fine and are different each other. Through a pattern reading mechanism built-in Anoto pen reads the dot pattern of each dot, an absolute position of the dot pattern on print medium is detected.

The print job generating section 107, when a generation request of print job is inputted from the Anoto pattern generating section 106, reads out the image data composed of (C, M, Y, K (K=0)) values and the Anoto pattern data from the RAM, and generates a print job described by these image data. Then, the print job generating section 107 sends the generated print job via cable.

The printer 20 includes an image data storing section 201, a layer thickness controlling section 202, and a print processing section 203.

The image data storing section 201 has an image data storing region 2011 to store the image data composed of (C, M, Y, K (K=0)) values sent from the PC 10 via cable, and an Anoto pattern data storing region 2012 to store the Anoto pattern data sent from the PC 10 via cable.

The layer thickness controlling section 202 calculates and corrects a toner amount of C, a toner amount of M, a toner amount of Y and a toner amount of K, on the basis of the (C, M, Y, K (K=0)) values of the image data stored in the image data storing region 2011 and K values of the Anoto pattern data stored in the Anoto pattern data storing region 2012, so that a total toner amount on respective dots becomes a predetermined amount or below; and outputs the corrected toner amounts of respective colors to the print processing section 203.

The print processing section 203 compounds an image of the image data with an Anoto pattern image of the Anoto pattern data; and prints a compound image on print medium.

Next, it is to explain operation of the image forming system of arrangement 1.

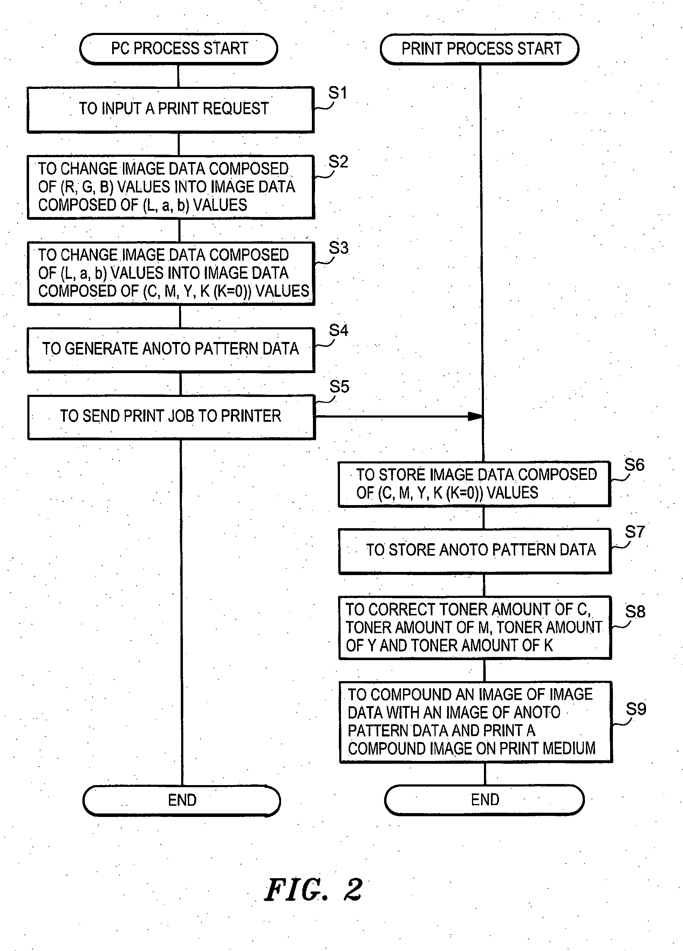

Fig. 2 is a flow chart showing operation of an image forming system in arrangement 1.

Firstly, after print request information, that is, a file name of image data that is requested to print is inputted to the PC 10 by user (step 1), the standard RGB profile changing section 104 sequentially reads out the image data of the file name designated by user from the image data storing section 101; and changes the image data composed of (R, G, B) values into image data composed of (L, a, b) values on the basis of the standard RGB profile 102 (step 2); and outputs the image data composed of (L, a, b) values to the coloring approximation use profile changing section 105.

The coloring approximation use profile changing section 105 changes the image data composed of (L, a, b) values inputted from the standard RGB profile changing section 104 into image data composed of (C, M, Y, K (K=0)) values on the basis of the coloring approximation use profile 103 (step 3), and writes the image data into the RAM. Then, the coloring approximation use profile changing section 105 outputs a generation request of Anoto pattern data to the Anoto pattern generating section 106.

The Anoto pattern generating section 106, when the generation request is inputted from the coloring approximation use profile changing section 105, generates Anoto pattern data on the basis of an Anoto pattern generation control program (step 4), and writes the Anoto pattern data into RAM. Then, the Anoto pattern generating section 106 outputs a generation request of print job to the print job generating section 107.

The print job generating section 107, when the generation request of print job is inputted from the Anoto pattern generating section 106, reads out the image data composed of (C, M, Y, K (K=0)) values and the Anoto pattern data from the RAM, and generates a print job described by these image data. Then, the print job generating section 107 sends the generated print job via cable (step 5).

The printer 20, when received the print job from the PC 10, writes the image data composed of (C, M, Y, K (K=0)) values described in the print job to the image data storing region 2011 of the image data storing section 201 (step 6).

The printer 20, after wrote the image data into the image data storing region 2011, writes the Anoto pattern data described in the print job into the Anoto pattern data storing region 2012 of the image data storing section 201 (step 7).

Then, the layer thickness controlling section 202 calculates and corrects a toner amount of C, a toner amount of M, a toner amount of Y and a toner amount of K, on the basis of the (C, M, Y, K (K=0)) values of the image data stored in the image data storing region 2011 and K values of the Anoto pattern data stored in the Anoto pattern data storing region 2012 so as to make a total toner amount on respective dots become a predetermined amount or below (step 8); and outputs the corrected toner amounts of respective colors to the print processing section 203.

The print processing section 203 compounds an image of the image data with an Anoto pattern image of the Anoto pattern data on the basis of the toner amounts of respective colors that are inputted from the print processing section 203; prints a compound image on print medium (step 9); and ends, process.

In arrangement 1, because the coloring approximation use profile .changing section 105 of the PC 10 changes the image data composed of (L, a, b) values inputted from the standard RGB profile changing section 104 into the image data composed of (C, M, Y, K (K=0)) values on the basis of the coloring approximation use profile 103, when the printer 20 performs an Anoto print of the image data received from the PC 10 onto print medium, it is unnecessary to perform a complement change process and link profile change process that were performed in prior art. Therefore, it is possible to keep a high thruput when the printer 20 performs an Anoto print.

### <Embodiment 1>

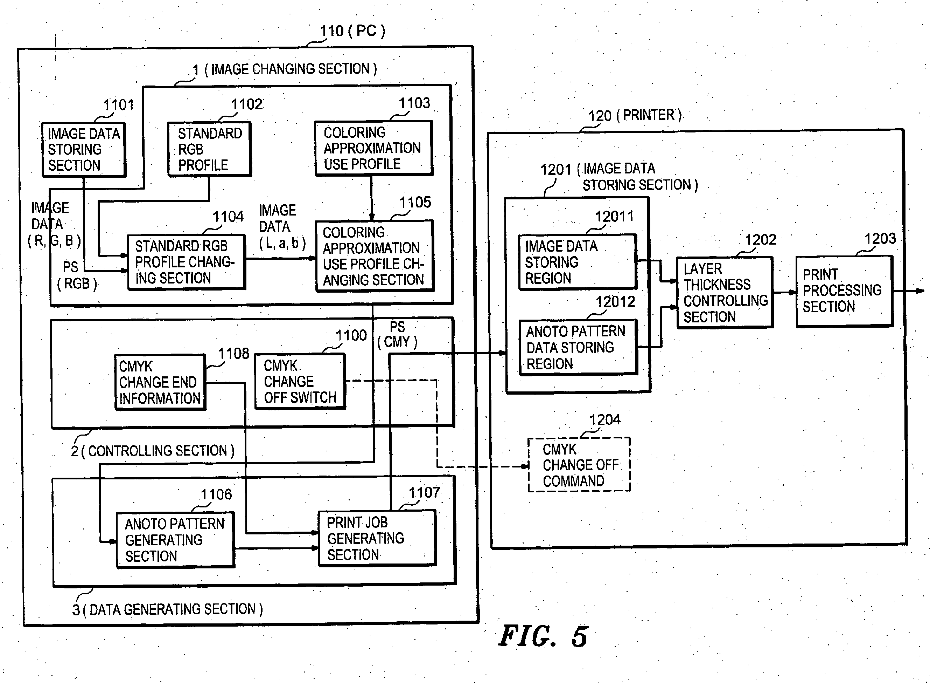

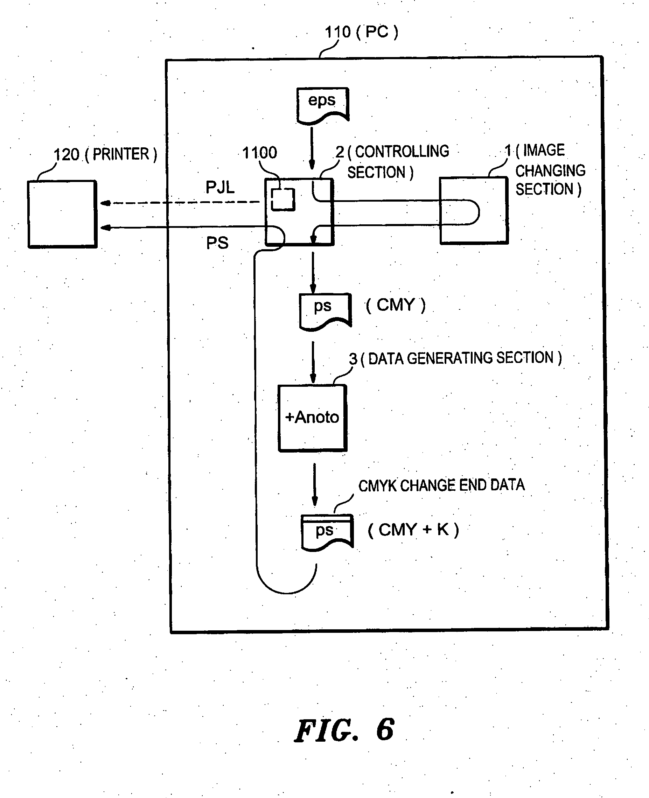

Fig. 5 is a block diagram showing a structure of an image forming system in embodiment 1 of the present invention; and Fig. 6 is a diagram showing flow of signal in an image forming system of embodiment 1 of the present invention.

As shown by Fig. 5, a PC 110 includes an image data storing section 1101, a standard RGB profile 1102, a coloring approximation use profile 1103, a standard RGB profile changing section 1104, a coloring approximation use profile changing section 1105, an Anoto pattern generating section 1106, and a print job generating section 1107. These components 1101~1107 are the same as that in arrangement 1. Moreover, the standard RGB profile 1102, the coloring approximation use profile 1103, the standard RGB profile changing section 1104 and the coloring approximation use profile changing section 1105 constitute an image changing section 1; and the Anoto pattern generating section 1106 and the print job generating section 1107 constitute a data generating section 3.

Further, a printer 120 includes an image data storing section 1201, a layer thickness controlling section 1202, and a print processing section 1203. These components 1201~1203 are the same as that in arrangement 1.

In the embodiment 1, when image data that has been changed to (C, M, Y, K (K=0)) values in the PC 110 is sent to the printer 120, a CMYK change end information is also sent to request the printer 120 not to perform a CMYK change process. The following is to explain operation of the embodiment 1 on the basis of the Figs. 5 and 6.

### [First Example]

As shown by Figs. 5 and 6, when sending the image data PS (CMY) composed of (C, M, Y, K (K=0)) values and changed by the coloring approximation use profile changing section 1105 to a data generating section 3, a controlling section 2 generates CMYK change end information 1108 and sends the CMYK change end information 1108 to the print job generating section 1107 of the data generating section 3.

The print job generating section 1107, after identified the CMYK change end information 1108, when generating a print job, appends the CMYK change end information 1108 as a head of print data and sends it to the printer 120 together with Anoto pattern data.

Then, the printer 120 identifies that the received image data has been changed by a CMYK change process, according to the CMYK change end information 1108. Continuously, in the printer 120, without performing a CMYK change process of image data, a compound image of image data and Anoto pattern data is printed on print medium by the print processing section 1203.

In the example, the CMYK change end information 1108 is appended as a head of the print data. However, it is possible to un-append a CMYK change information representing a request that the printer 120 needs to perform a CMYK change. In the case, the printer 120 identifies that the CMYK change information is not appended, then, performs a CMYK change process of image data.

### [Second Example]

The second example has a structure different from the first example, as shown by broken line in Figs. 5 and 6, a CMYK change off switch 1100 is provided in the controlling section 2 of the PC 110. Through an operation of user, a CMYK change off command (PJL) 1204 can be sent from the controlling section 2 to the printer 120.

In the case, the printer 120, when received the CMYK change off command (PJL) 1204, identifies that all image data to be received after now has been performed by a CMYK change process, then, in the printer 120, the CMYK change process of image data is not be performed.

According to the embodiment 1, when the printer 120 performs an Anoto print of the image data received from the PC 110 onto print medium, it is unnecessary to perform a complement change process and link profile change process that were performed in prior art. Therefore, it is possible to keep a high thruput when the printer 120 performs an Anoto print.

Next, it is to explain a formation of Anoto pattern in the Anoto pattern generating section 1106 on the basis of Figs. 7~10.

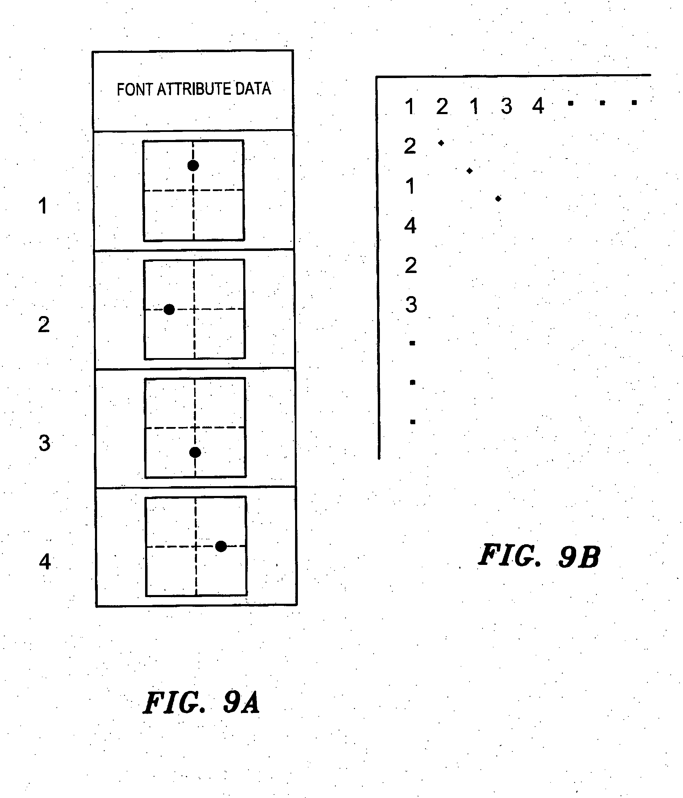

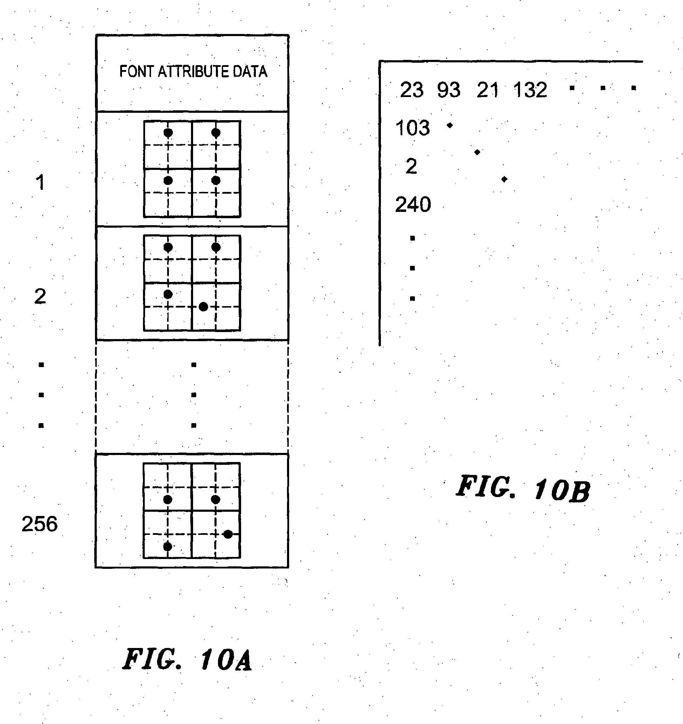

Fig. 7 is a diagrams showing basic Anoto dots; Fig. 8 is a diagram showing combinations of basic Anoto dots; Fig. 9A~Fig. 9B are diagrams showing Anoto pattern according to basic Anoto dots; and Fig. 10A~Fig. 10B are diagrams showing Anoto pattern according to combinations of basic Anoto dots.

Moreover, the Anoto pattern is slight dot pattern printed on paper corresponding to Anoto function, and is furnished in a predetermined interval with a grid shape. As stated above, through an Anoto pen to read each dot pattern, it is possible to detect the absolute position of the dot pattern on print medium.

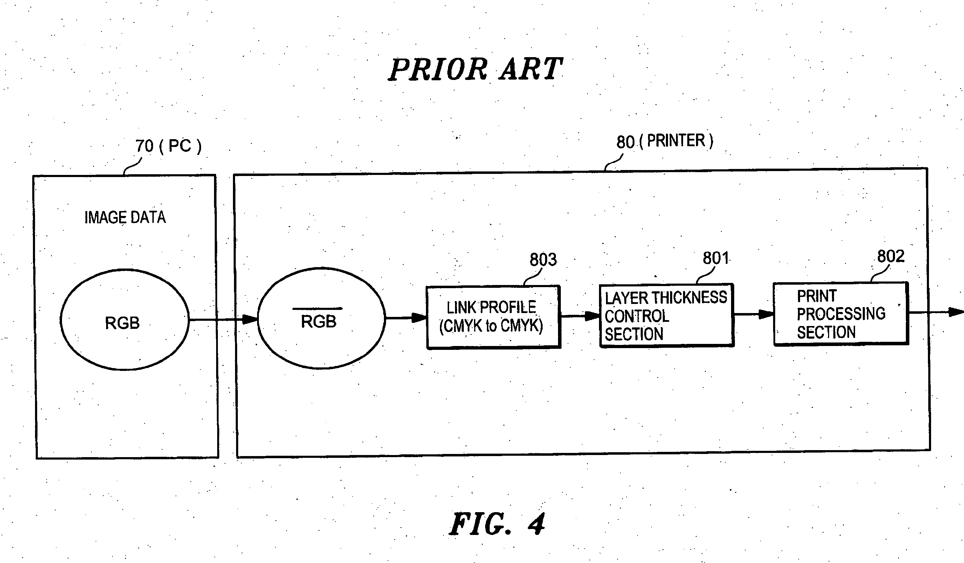

As shown by Fig. 7, 4 basic Anoto dots are formed by respective dots. Each dot is located at a position that deviates slightly from a cross point of orthogonal imaginary grid lines along a longways direction or a widthways direction. The Anoto pattern generating section 1106 has font data that sets the 4 basic Anoto dots as character code data (first character code data), as shown by Fig. 7. The font data has, for example, about 1760 bytes.

When setting a default, as shown by Fig. 9B, through furnishing the 4 font data on paper (e.g. A4) according to a predetermined combination, a first Anoto pattern is generated. The character code data to represent the first Anoto pattern has, for example, about 694, 691 bytes. Moreover, as shown by Fig 9B, the numerical characters on paper A4 correspond to the number (1~4) of font attribute data in Fig. 9A. As Anoto pattern data, the font data and the character code data are sent to printer. That is, in a PS file to be sent to the printer, image data defined by CMY values and Anoto pattern data defined by K value are contained.

Further, as shown by Fig. 10, through optionally combining the 4 Anoto dots, respective character code data (second character code data) are formed as font data. The Anoto pattern generating section 1106 has the font data (e.g. about 2989 bytes). The total number of the font data obtained by combining the 4 basic Anoto dots is 256.

The Anoto pattern generating section 1106, as shown by Fig. 10B, generates a second Anoto pattern through furnishing the 256 font data on paper according to a predetermined combination, The character code data to represent the second Anoto pattern has, for example, 173, 63 bytes. Moreover, in the Fig. 10B, the numerical characters on paper correspond to the number (1~256) of font attribute data in Fig. 10A.

In the embodiment, it is possible to select one of the first character code data and the second character code data so as to generate the Anoto pattern on print data.

Here, in the case to select the second character code data, though the font data to be sent increased by about 1200 bytes, the Anoto pattern data to be sent greatly decreased by about 520, 000 bytes. Therefore, through selecting the second character code data when generating Anoto pattern, it is possible to greatly reduce sending/receiving time of data, analysis time of data, and the like.

Moreover, in the embodiments described above, Anoto pattern data is designated by K value as background pattern data. Instead of the Anoto pattern data, other background pattern data can be used. In the case, color image data may be performed by CMYK change and the other background pattern data may be designated by one of CMYK values.

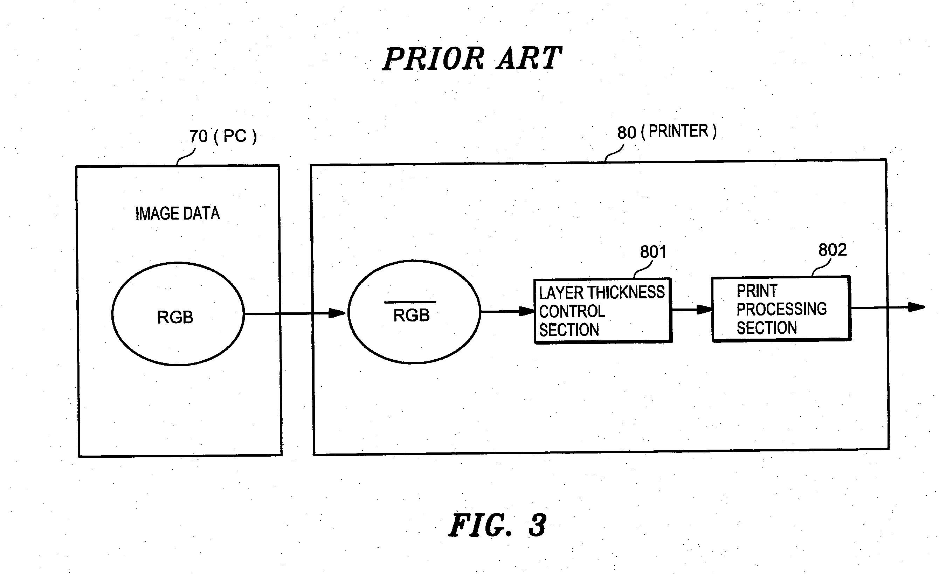

As shown by Fig. 3, like the embodiments 1 and 2 of the image forming system, in an image forming system of the embodiment 2, a personal computer (hereinafter: PC) 50 which serves as an color image processing apparatus and a printer 60 which serves as an color image forming apparatus are connected via cable (not shown).

The PC 50, like the embodiment 2, is an apparatus to send either of image data whose image to be printed on print medium by printer 60 has a coloring that is approximate to the coloring of image displayed on displayer; and image data that makes an image which is printed on print medium by printer 60 have a conventional familiar coloring that is different from the coloring of image displayed on displayer in the case that user has a request, to the printer 60.

The PC 50 includes an image data storing section 501, a standard RGB profile 502, a coloring approximation use profile 503, a correction print use profile 504, a standard RGB profile changing section 505, a coloring approximation use profile changing section 506, a correction print use profile changing section 507, an Anoto pattern generating section 508, a profile change selecting section 509 and a print job generating section 510. Here, the image data storing section 501, the standard RGB profile 502, the coloring approximation use profile 503, the standard RGB profile changing section 505, the coloring approximation use profile changing section 506, the Anoto pattern generating section 508, and a print job generating section 510 are the same as that in embodiments 1 and 2

The correction print use profile 504 is a file for changing image data composed of (L, a, b) values into image data composed of (C, M, Y, K (K=0)) values that make an image having conventional familiar coloring be performed by an Anoto print on print medium. A data formation of the correction print use profile 504 is in a table form. Moreover, the correction print use profile 504 incorporates a profile generated by tool to make profile according to a request of user in the Acrobat Distiller.

The correction print use profile changing section 507 changes the image data that is inputted from the standard RGB profile changing section 505 and is composed of (L, a, b) values indicating a coloring of an image displayed on displayer, into image data composed of (C, M, Y, K (K=0)) values that enable an image having conventional familiar coloring that is different from the coloring displayed on displayer to be performed by an Anoto print on print medium, on the basis of the correction print use profile 504; and outputs the changed image data to the printer 60 via connection cable. Further, the correction print use profile changing section 507, after sent the image data composed of (C, M, Y, K (K=0)) values to the printer 60, outputs a start instruction to the Anoto pattern generating section 508.

The profile change selecting section 509 judges whether the process designation information described in the print request information represents an approximation process or an conventional process. On the one hand, if the process designation information represents the approximation process, the profile change selecting section 509, after outputted a start instruction to the coloring approximation use profile changing section 506, further outputs the file name described in the print request information to the standard RGB profile changing section 505. On the other hand, if the process designation information represents the conventional process, the profile change selecting section 509, after outputted a start instruction to the correction print use profile changing section 507, further outputs the file name to the standard RGB profile changing section 505.

The printer 60 includes an image data storing section 601, a layer thickness controlling section 602, and a print processing section 603. The image data storing section 601, the layer thickness controlling section 602, and the print processing section 603 are the same as that in embodiments 1 and 2.

Next, it is to explain operation of the image forming system of the embodiment 3 of the present invention.

Fig. 6 is a flow chart showing operation of an image forming system in embodiment 3 of the present invention.

When print request information is inputted by user (step 31), the profile change selecting section 509 judges whether the process designation information described in the print request information represents an approximation process or a conventional process (step 32). The profile change selecting section 509, when judged that the process designation information described in the print request information represents an approximation process (step 32, approximation process), outputs a start instruction to the coloring approximation use profile changing section 506 (step 33). Further, the profile change selecting section 509 outputs a file name described in the print request information to the standard RGB profile changing section 505.

The standard RGB profile changing section 505, when the file name is inputted from the profile change selecting section 509, sequentially reads out the image data of the file name from the image data storing section 501; and changes the image data composed of (R, G, B) values into image data composed of (L, a, b) values on the basis of the standard RGB profile 502 (step 34). Further, the standard RGB profile changing section 505 outputs the image data composed of (L, a, b) values to the coloring approximation use profile changing section 506.

The coloring approximation use profile changing section 506 changes the image data composed of (L, a, b) values inputted from the standard RGB profile changing section 505 into image data composed of (C, M, Y, K (K=0)) values on the basis of the coloring approximation use profile 503 (step 35); and writes the image data into RAM. Then, the coloring approximation use profile changing section 506 outputs a notification representing that the image data has been written to the RAM, to the Anoto pattern generating section 508. Then, the flow (process) is shifted to step S39.

In step S32, the profile change selecting section 509, when judged that the process designation information described in the print request information represents a conventional process (step 32, conventional process), outputs a start instruction to the correction print use profile changing section 507 (step 36). Further, the profile change selecting section 509 outputs the file name described in the print request information to the standard RGB profile changing section 505.

The standard RGB profile changing section 505, when the file name is inputted from the profile change selecting section 509, sequentially reads out the image data of the file name from the image data storing section 501; changes the image data that is composed of (R, G, B) values and has been read out, into the image data composed of (L, a, b) values on the basis of the correction RGB profile 303 on the basis of the standard RGB profile 502 (step 37); and outputs the changed image data composed of (L, a, b) values to the correction print use profile changing section 507.

The correction print use profile changing section 507 changes the image data that is inputted from the standard RGB profile changing section 505 and is composed of (L, a, b) values into image data composed of (C, M, Y, K (K=0)) values on the basis of the correction print use profile 504 (step 38); and writes the image data into RAM. Then, the correction print use profile changing section 507 outputs a generation instruction of Anoto pattern data to the Anoto pattern generating section 508.

The following processes from step S39 in which the Anoto pattern generating section 508 generates Anoto pattern data to step 44 in which the printer 60 compounds an image of the image data composed of (C, M, Y, K (K=0)) values sent from the PC 50 with an image of Anoto pattern data and prints a compound image onto print medium, are the same as the processes in embodiment 1 from step S4 to step S9.

According to the embodiment 3, it is possible to obtain the same effect as that in embodiment 1. Further, according to the print request information of user, when the conventional process is requested, the correction print use profile changing section 507 changes the image data composed of (L, a, b) values inputted from the standard RGB profile changing section 505 into the image data composed of (C, M, Y, K (K=0)) values that can make an image be printed on print medium with a conventional familiar coloring. Therefore, it is possible that the printer 60 performs an Anoto print to print an image onto print medium with a conventional familiar coloring that is different from a coloring displayed on displayer. As a result, it is possible to reply to a request that user wishes to actively use such image data which serves as information resource and whose image printed on print medium has a coloring that has been corrected to an objective coloring.

The coloring approximation use profile is selectable and can be updated so as to suit printer to be changed. For example, through storing previously a coloring approximation use profile that is exclusively used by printer into a memory in the printer and performing a communication between the printer and PC when the printer and the PC are connected, the coloring approximation use profile in the printer is sent to the PC. Thus, the coloring approximation use profile may be another profile as new profile; also may be a profile of new version.

Further, in the memory of the printer, a homepage address of a business company of the printer can be stored. Thus, through performing a communication between the printer and PC when the printer and the PC are connected, the PC can refer to the homepage address stored in the printer and access the homepage of the business company to download the coloring approximation use profile used for printer from the homepage. Furthermore, it is possible to perform an update of the coloring approximation use profile by using record medium such as USB or compact disk CD for suiting an update of printer driver.

### <Embodiment 4>

Fig. 9 is a block diagram showing a structure of an image forming system in embodiment 4 of the present invention; and Fig. 10 is a diagram showing flow of signal in an image forming system of embodiment 4 of the present invention.

As shown by Fig. 9, a PC 110 includes an image data storing section 1101, a standard RGB profile 1102, a coloring approximation use profile 1103, a standard RGB profile changing section 1104, a coloring approximation use profile changing section 1105, an Anoto pattern generating section 1106, and a print job generating section 1107. These components 1101∼1107 are the same as that in the embodiment 1. Moreover, the standard RGB profile 1102, the coloring approximation use profile 1103, the standard RGB profile changing section 1104 and the coloring approximation use profile changing section 1105 constitute an image changing section 1; and the Anoto pattern generating section 1106 and the print job generating section 1107 constitute a data generating section 3.

Further, a printer 120 includes an image data storing section 1201, a layer thickness controlling section 1202, and a print processing section 1203. These components 1201∼1203 are the same as that in the embodiment 1.

In the embodiment 4, when image data that has been changed to (C, M, Y, K (K=0)) values in the PC 110 is sent to the printer 120, a CMYK change end information is also sent to request the printer 120 not to perform a CMYK change process. The following is to explain operation of the embodiment 4 on the basis of the Figs. 9 and 10.

### [First Example]

As shown by Figs. 9 and 10, when sending the image data PS (CMY) composed of (C, M, Y, K (K=0)) values and changed by the coloring approximation use profile changing section 1105 to a data generating section 3, a controlling section 2 generates CMYK change end information 1108 and sends the CMYK change end information 1108 to the print job generating section 1107 of the data generating section 3.

The print job generating section 1107, after identified the CMYK change end information 1108, when generating a print job, appends the CMYK change end information 1108 as a head of print data and sends it to the printer 120 together with Anoto pattern data.

Then, the printer 120 identifies that the received image data has been changed by a CMYK change process, according to the CMYK change end information 1108. Continuously, in the printer 120, without performing a CMYK change process of image data, a compound image of image data and Anoto pattern data is printed on print medium by the print processing section 1203.

In the example, the CMYK change end information 1108 is appended as a head of the print data. However, it is possible to un-append a CMYK change information representing a request that the printer 120 needs to perform a CMYK change. In the case, the printer 120 identifies that the CMYK change information is not appended, then, does not perform a CMYK change process of image data.

### [Second Example]

The second example has a structure different from the first example, as shown by broken line in Figs. 9 and 10, a CMYK change off switch 1100 is provided in the controlling section 2 of the PC 110. Through an operation of user, a CMYK change off command (PJL) 1204 can be sent from the controlling section 2 to the printer 120.

In the case, the printer 120, when received the CMYK change off command (PJL) 1204, identifies that all image data to be received after now has been performed by a CMYK change process, then, in the printer 120, the CMYK change process of image data is not be performed.

According to the embodiment 4, when the printer 120 performs an Anoto print of the image data received from the PC 110 onto print medium, it is unnecessary to perform a complement change process and link profile change process that were performed in prior art. Therefore, it is possible to keep a high thruput when the printer 120 performs an Anoto print.

Next, it is to explain a formation of Anoto pattern in the Anoto pattern generating section 1106 on the basis of Figs. 11∼14.

Fig. 11 is a diagrams showing basic Anoto dots; Fig. 12 is a diagram showing combinations of basic Anoto dots; Fig. 13A∼Fig. 13B are diagrams showing Anoto pattern according to basic Anoto dots; and Fig. 14A∼Fig. 14B are diagrams showing Anoto pattern according to combinations of basic Anoto dots.

Moreover, the Anoto pattern is slight dot pattern printed on paper corresponding to Anoto function, and is furnished in a predetermined interval with a grid shape. As stated above, through an Anoto pen to read each dot pattern, it is possible to detect the absolute position of the dot pattern on print medium.

As shown by Fig. 11, 4 basic Anoto dots are formed by respective dots. Each dot is located at a position that deviates slightly from a cross point of orthogonal imaginary grid lines along a longways direction or a widthways direction. The Anoto pattern generating section 1106 has font data that sets the 4 basic Anoto dots as character code data (first character code data), as shown by Fig. 11. The font data has, for example, about 1760 bytes.

When setting a default, as shown by Fig. 13B, through furnishing the 4 font data on paper (e.g. A4) according to a predetermined combination, a first Anoto pattern is generated. The character code data to represent the first Anoto pattern has, for example, about 694, 691 bytes. Moreover, as shown by Fig. 13B, the numerical characters on paper A4 correspond to the number (1-4) of font attribute data in Fig. 13A. As Anoto pattern data, the font data and the character code data are sent to printer. That is, in a PS file to be sent to the printer, image data defined by CMY values and Anoto pattern data defined by K value are contained.

Further, as hown by Fig. 12, through optionally combining the 4 Anoto dots, respective character code data (second character code data) are formed as font data. The Anoto pattern generating section 1106 has the font data (e.g. about 2989 bytes). The total number of the font data obtained by combining the 4 basic Anoto dots is 256.

The Anoto pattern generating section 1106, as shown by Fig. 14B, generates a second Anoto pattern through furnishing the 256 font data on paper according to a predetermined combination. The character code data to represent the second Anoto pattern has, for example, 173, 63 bytes. Moreover, in the Fig. 14B, the numerical characters on paper correspond to the number (1∼256) of font attribute data in Fig. 14A.

In the embodiment, it is possible to select one of the first character code data and the second character code data so as to generate the Anoto pattern on print data.

Here, in the case to select the second character code data, though the font data to be sent increased by about 1200 bytes, the Anoto pattern data to be sent greatly decreased by about 520, 000 bytes. Therefore, through selecting the second character code data when generating Anoto pattern, it is possible to greatly reduce sending/receiving time of data, analysis time of data, and the like.

Moreover, in the embodiments described above, Anoto pattern data is designated by K value as background pattern data. Instead of the Anoto pattern data, other background pattern data can be used. In the case, color image data may be performed by CMYK change and the other background pattern data may be designated by one of CMYK values.

## Claims

1. An image forming system comprising:
a color image forming apparatus (120) and;
an image processing apparatus (110) which is connected with the color image forming apparatus,
the image processing apparatus includes:
an image data storing section (1101) configured to store RGB color image data;
a color changing section (1) configured to change RGB color image data to CMYK(K=o) color image data having no K value; and
a sending section (1107) configured to send print data including the CMYK(K=o) color image data having no K value, and dot pattern data for forming a dot pattern designated by only K values, to the color image forming apparatus;
wherein the dot pattern is a dot pattern furnished in a predetennined interval with a grid shape and configured to be printed on a medium, wherein the dot pattern comprises first, second, third and fourth basic dots, each of the basic dots being located at a position that deviates slightly from a cross point of orthogonal imaginary grid lines along a longways direction or a widthways direction; and
the dot pattern is configured such that an absolute position of the dot pattern on the medium is detected when a device comprising a pattern reading mechanism reads the dot pattern;
the color image forming apparatus includes:
a printing section configured to receive the print data from the image processing apparatus, wherein the printing section is configured to print the CMYK(K=o) color image data having no K value by using C, M and Y developer and without using K developer on the medium, and to print the dot pattern designated by only K values by using K developer on the medium, **characterized by**:
the image processing apparatus further comprising:
a dot pattern generating section (1106) configured to store:
first character code data mapping the numbers 1 to 4 to respective first font data corresponding to the first, second, third or fourth basic dots;
second character code data mapping the numbers 1 to 256 to respective second font data corresponding to a combination of four dots selected from the basic dots and arranged in a 2-by-2 grid;
wherein the color image forming apparatus is configured to receive the first or second font data and a predetermined combination of numerical characters encoded using the respective first or second character code data; and the numerical characters correspond to positions on the paper forming a grid, and the dot pattern is produced by mapping each of the numerical characters to the respective font data using the respective first or second character code data.

2. An image forming system) according to claim 1, wherein:
the color changing section (1) is configured to change RGB color image data to CMYK(K=o) color image data having no K value using a coloring approximation use profile for making a coloring of the color image when printed on print medium be approximate to a coloring of the image when displayed on a displayer.

3. An image forming system according to claim 1, configured to permit a user selection of whether the first or second character code data is used.

4. An image forming system according to any preceding claim, wherein the sending section (1107) is configured to send a notification to the color image forming apparatus that the RGB color image data has been changed to CMYK(K=o) color image data.

5. An image forming system according to claim 4, wherein the sending section (1107) is configured to add to the notification to the print data.

6. An image forming system according to claim 4, wherein the sending section (1107) is configured to send the notification as a command to the color image forming apparatus.

7. An image forming method in an image forming system comprising:
a color image forming apparatus (120) and an image processing apparatus (110) which is connected with the color image forming apparatus, comprising steps of:
changing RGB color image data to CMYK(K=o) color image data having no K value;
sending print data including the CMYK(K=o) color image data having no K value, and dot pattern data for forming a dot pattern designated by only K values, from the image processing apparatus to the color image forming apparatus; and
printing the print data from the image processing apparatus, wherein the CMYK(K=o) color image data having no K value is printed using C, M and Y developer and without using K developer on the medium, and the dot pattern designated by only K values is printed using K developer on the medium;
wherein the dot pattern data is a dot pattern furnished in a predetermined interval with a grid shape and configured to be printed on a medium, wherein the dot pattern comprises first, second, third and fourth basic dots, each of the basic dots being located at a position that deviates slightly from a cross point of orthogonal imaginary grid lines along a longways direction or a widthways direction; and
the dot pattern is configured such that an absolute position of the dot pattern on the medium is detected when a device comprising a pattern reading mechanism reads the dot pattern;;
**characterized by**:a first character code data mapping the numbers 1 to 4 to respective first font data corresponding to the first, second, third or fourth basic dots; and
a second character code data mapping the numbers 1 to 256 to respective second font data corresponding to a combination of four dots selected from the basic dots and arranged in a 2-by-2 grid;
wherein the color image forming apparatus receives the first or second font data and a predetermined combination of numerical characters encoded using the respective first or second character code data; and
the numerical characters correspond to positions on the paper forming a grid, and the dot pattern is produced by mapping each of the numerical characters to the respective font data using the respective first or second character code data.

8. The image forming method according to claim 7, further comprising:
making a coloring of the color image printed on print medium be approximate to a coloring of an image displayed on displayer through using a previously stored color approximation use profile.

9. The image forming method according to claim 7 or 8, further comprising:
sending a command to avoid performance of a CMYK change process by the color image forming apparatus, when sending the print data to the color image forming apparatus.

10. The image forming method according to any of claims 7 to 9, further comprising:
receiving user selection of whether the first character code data or the second character code data is to be used.

## Patentansprüche

1. Bilderzeugungssystem, das Folgendes beinhaltet:
eine Farbbilderzeugungsvorrichtung (120) und;
eine Bildverarbeitungsvorrichtung (110), die mit der Farbbilderzeugungsvorrichtung verbunden ist,
wobei die Bildverarbeitungsvorrichtung Folgendes umfasst:
einen Bilddatenspeicherungsteil (1101), der konfiguriert ist, um RGB-Farbbilddaten zu speichern;
einen Farbänderungsteil (1), der konfiguriert ist, um RGB-Farbbilddaten auf CMYK(K=0)-Farbbilddaten zu ändern, die keinen K-Wert aufweisen; und
einen Sendeteil (1107), der konfiguriert ist, um Druckdaten, einschließlich der CMYK(K=0)-Farbbilddaten, die keinen K-Wert aufweisen, und Punktmusterdaten zum Ausbilden eines Punktmusters, das nur durch K-Werte bestimmt ist, an die Farbbilderzeugungsvorrichtung zu senden;
wobei das Punktmuster ein Punktmuster ist, das in einem vorgegebenen Intervall mit einer Rasterform bereitgestellt und konfiguriert ist, um auf einem Medium gedruckt zu werden, wobei das Punktmuster erste, zweite, dritte und vierte Grundpunkte beinhaltet, wobei sich jeder der Grundpunkte an einer Position befindet, die von einem Kreuzpunkt von orthogonalen imaginären Rasterlinien entlang einer Längsrichtung oder einer Breitenrichtung leicht abweichen; und
das Punktmuster derart konfiguriert ist, dass eine absolute Position des Punktmusters auf dem Medium erfasst wird, wenn ein Gerät, das einen Musterlesemechanismus beinhaltet, das Punktmuster liest;
wobei die Farbbilderzeugungsvorrichtung Folgendes umfasst:
einen Druckteil, der konfiguriert ist, um die Druckdaten von der Bildverarbeitungsvorrichtung zu empfangen, wobei der Druckteil konfiguriert ist, um CMYK(K=0)-Farbbilddaten, die keinen K-Wert aufweisen, unter Verwendung von C-, M- und Y-Entwickler und ohne Verwendung von K-Entwickler auf dem Medium zu drucken, und um das Punktmuster, das nur durch K-Werte bestimmt ist, unter Verwendung von K-Entwickler auf dem Medium zu drucken,
**gekennzeichnet dadurch, dass**:
die Bildverarbeitungsvorrichtung ferner Folgendes beinhaltet:
einen Punktmustergenerierungsteil (1106), der konfiguriert ist, um Folgendes zu speichern:
erste Zeichencodedaten, wodurch die Nummern 1 bis 4 jeweiligen ersten Fontdaten zugeordnet werden, die mit den ersten, zweiten, dritten oder vierten Grundpunkten korrespondieren;
zweite Zeichencodedaten, wodurch die Nummern 1 bis 256 jeweiligen zweiten Fontdaten zugeordnet werden, die mit einer Kombination von vier Punkten korrespondieren, die aus den Grundpunkten ausgewählt und in einem 2-mal-2-Raster angeordnet sind;
wobei die Farbbilderzeugungsvorrichtung konfiguriert ist, um die ersten oder zweiten Fontdaten und eine vorgegebene Kombination von numerischen Zeichen, codiert unter Verwendung der jeweiligen ersten oder zweiten Zeichencodedaten, zu empfangen; und die numerischen Zeichen mit Positionen auf dem Papier korrespondieren, die ein Raster erzeugen, und das Punktmuster durch Zuordnen von jedem der numerischen Zeichen auf die jeweiligen Fontdaten unter Verwendung der jeweiligen ersten oder zweiten Zeichencodedaten produziert wird.

2. Bilderzeugungssystem gemäß Anspruch 1, wobei: der Farbänderungsteil (1) konfiguriert ist, um RGB-Farbbilddaten auf CMYK(K=0)-Farbbilddaten zu ändern, die keinen K-Wert aufweisen, unter Verwendung eines Färbungsannäherungsnutzungsprofils, um eine Färbung des Farbbildes, wenn auf einem Druckmedium gedruckt, annähernd zu einer Färbung des Bildes zu machen, wenn auf einem Anzeigegerät angezeigt.

3. Bilderzeugungssystem gemäß Anspruch 1, das konfiguriert ist, um eine Benutzerauswahl zu gestatten, ob die ersten oder zweiten Zeichencodedaten verwendet werden.

4. Bilderzeugungssystem gemäß einem vorhergehenden Anspruch, wobei der Sendeteil (1107) konfiguriert ist, um eine Benachrichtigung an die Farbbilderzeugungsvorrichtung zu senden, dass die RGB-Farbbilddaten auf CMYK(K=0)-Farbbilddaten geändert worden sind.

5. Bilderzeugungssystem gemäß Anspruch 4, wobei der Sendeteil (1107) konfiguriert ist, um die Benachrichtigung zu den Druckdaten hinzuzufügen.

6. Bilderzeugungssystem gemäß Anspruch 4, wobei der Sendeteil (1107) konfiguriert ist, um die Benachrichtigung als einen Befehl an die Farbbilderzeugungsvorrichtung zu senden.

7. Bilderzeugungsverfahren in einem Bilderzeugungssystem, das Folgendes beinhaltet:
eine Farbbilderzeugungsvorrichtung (120) und eine Bildverarbeitungsvorrichtung (110), die mit der Farbbilderzeugungsvorrichtung verbunden ist, das folgende Schritte beinhaltet:
Ändern von RGB-Farbbilddaten auf CMYK(K=0)-Farbbilddaten, die keinen K-Wert aufweisen;
Senden von Druckdaten, einschließlich der CMYK(K=0)-Farbbilddaten, die keinen K-Wert aufweisen, und Punktmusterdaten zum Ausbilden eines Punktmusters, das nur durch K-Werte bestimmt ist, von der Bildverarbeitungsvorrichtung an die Farbbilderzeugungsvorrichtung; und
Drucken der Druckdaten von der Bildverarbeitungsvorrichtung, wobei die CMYK(K=0)-Farbbilddaten, die keinen K-Wert aufweisen, unter Verwendung von C-, M- und Y-Entwickler und ohne Verwendung von K-Entwickler auf dem Medium gedruckt werden, und das Punktmuster, das nur durch K-Werte bestimmt ist, unter Verwendung von K-Entwickler auf dem Medium gedruckt wird;
wobei die Punktmusterdaten ein Punktmuster sind, das in einem vorgegebenen Intervall mit einer Rasterform bereitgestellt und konfiguriert ist, um auf einem Medium gedruckt zu werden, wobei das Punktmuster erste, zweite, dritte und vierte Grundpunkte beinhaltet, wobei sich jeder der Grundpunkte an einer Position befindet, die von einem Kreuzpunkt von orthogonalen imaginären Rasterlinien entlang einer Längsrichtung oder einer Breitenrichtung leicht abweichen; und
das Punktmuster derart konfiguriert ist, dass eine absolute Position des Punktmusters auf dem Medium erfasst wird, wenn ein Gerät, das einen Musterlesemechanismus beinhaltet, das Punktmuster liest;
**gekennzeichnet durch**: erste Zeichencodedaten, wodurch die Nummern 1 bis 4 jeweiligen ersten Fontdaten zugeordnet werden, die mit den ersten, zweiten, dritten oder vierten Grundpunkten korrespondieren; und
zweite Zeichencodedaten, wodurch die Nummern 1 bis 256 jeweiligen zweiten Fontdaten zugeordnet werden, die mit einer Kombination von vier Punkten korrespondieren, die aus den Grundpunkten ausgewählt und in einem 2-mal-2-Raster angeordnet sind;
wobei die Farbbilderzeugungsvorrichtung die ersten oder zweiten Fontdaten und eine vorgegebene Kombination von numerischen Zeichen, codiert unter Verwendung der jeweiligen ersten oder zweiten Zeichencodedaten, empfängt; und
die numerischen Zeichen mit Positionen auf dem Papier korrespondieren, die ein Raster erzeugen, und das Punktmuster **durch** Zuordnen von jedem der numerischen Zeichen auf die jeweiligen Fontdaten unter Verwendung der jeweiligen ersten oder zweiten Zeichencodedaten produziert wird.

8. Bilderzeugungsverfahren gemäß Anspruch 7, das ferner Folgendes beinhaltet:
Annähernd-Machen einer Färbung des auf einem Druckmedium gedruckten Farbbildes zu einer Färbung eines auf einem Anzeigegerät angezeigten Bildes, unter Verwendung eines zuvor gespeicherten Farbannäherungsnutzungsprofils.

9. Bilderzeugungsverfahren gemäß Anspruch 7 oder 8, das ferner Folgendes beinhaltet:
Senden eines Befehls, um Durchführung eines CMYK-Änderungsprozesses durch die Farbbilderzeugungsvorrichtung zu vermeiden, wenn die Druckdaten an die Farbbilderzeugungsvorrichtung gesendet werden.

10. Bilderzeugungsverfahren gemäß einem der Ansprüche 7 bis 9, das ferner Folgendes beinhaltet:
Empfangen einer Benutzerauswahl, ob die ersten Zeichencodedaten oder die zweiten Zeichencodedaten verwendet werden sollen.

## Revendications

1. Système de formation d'images comportant :
un appareil de formation d'images en couleurs (120) et ;
un appareil de traitement d'images (110) qui est connecté à l'appareil de formation d'images en couleurs,
l'appareil de traitement d'images inclut :
une section de stockage de données-images (1101) configurée de manière à stocker des données-images couleur RGB ;
une section de changement des couleurs (1) configurée de manière à transformer des données-images couleur RGB en données-images couleur CMYK (K = 0) n'ayant aucune valeur K ; et
une section d'émission (1107) configurée de manière à émettre des données à imprimer, incluant les données-images couleur CMYK (K = 0) n'ayant aucune valeur K, ainsi que les données à schéma en points pour former un schéma en points désigné par les seules valeurs K, vers l'appareil de formation d'images en couleurs ;
cas dans lequel le schéma en points est un schéma en points prévu dans un intervalle prédéterminé avec une forme en grille et configuré de manière à être imprimé sur un support, cas dans lequel le schéma en points comprend des premiers, deuxièmes, troisièmes et quatrièmes points de base, chacun des points de base étant situé au niveau d'une position qui s'écarte légèrement d'un point de croisement entre des lignes de grille imaginaires orthogonales le long d'un sens de la longueur ou d'un sens de la largeur ; et
le schéma en points est configuré de sorte qu'une position absolue du schéma en points sur le support soit détectée lorsqu'un dispositif, qui comprend un mécanisme de lecture de schémas, lit le schéma en points ;
l'appareil de formation d'images en couleurs inclut :
une section d'impression configurée de manière à recevoir les données à imprimer en provenance de l'appareil de traitement d'images, cas dans lequel la section d'impression est configurée de manière à imprimer les données-images couleur CMYK (K = 0) n'ayant aucune valeur K, en utilisant le développeur C, M et Y et sans utiliser le développeur K sur le support, et à imprimer le schéma en points désigné par les seules valeurs K en utilisant le développeur K sur le support,
**caractérisé par le fait que** :
l'appareil de traitement d'images comprend en outre :
une section de génération de schémas en points (1106) configurée de manière à stocker :
des premières données à codes de caractères servant à mapper les nombres 1 à 4 vers des premières données de police respectives correspondant aux premiers, deuxièmes, troisièmes ou quatrièmes points de base ;
des deuxièmes données à codes de caractères servant à mapper les nombres 1 à 256 vers des deuxièmes données de police respectives correspondant à une combinaison de quatre points sélectionnés parmi les points de base et agencés suivant une grille de 2 par 2 ;
cas dans lequel l'appareil de formation d'images en couleurs est configuré de manière à recevoir les premières ou deuxièmes données de police ainsi qu'une combinaison prédéterminée de caractères numériques codés grâce à l'utilisation des premières ou deuxièmes données à codes de caractères respectives ; et
les caractères numériques correspondent à des positions sur le papier formant une grille, et le schéma en points est produit en mappant chacun des caractères numériques vers les données de police respectives grâce à l'utilisation des premières ou deuxièmes données à codes de caractères respectives.

2. Système de formation d'images selon la revendication 1 :
la section de changement des couleurs (1) étant configurée de manière à transformer des données-images couleur RGB en données-images couleur CMYK (K = 0) n'ayant aucune valeur K, en utilisant un profil d'utilisation de l'approximation de la coloration, pour qu'une coloration de l'image couleur, lorsqu'elle est imprimée sur un support d'impression, ait approximativement une coloration de l'image quand elle est affichée sur une unité d'affichage.

3. Système de formation d'images selon la revendication 1, configuré de manière à permettre une sélection Utilisateur pour déterminer si les premières ou deuxièmes données à codes de caractères doivent être utilisées.

4. Système de formation d'images selon l'une quelconque des revendications précédentes, la section d'émission (1107) étant configurée de manière à envoyer une notification à l'appareil de formation d'images en couleurs selon laquelle les données-images couleur RGB ont été transformées en données-images couleur CMYK (K = 0).

5. Système de formation d'images selon la revendication 4, la section d'émission (1107) étant configurée de manière à ajouter la notification aux données à imprimer.

6. Système de formation d'images selon la revendication 4, la section d'émission (1107) étant configurée de manière à envoyer la notification sous forme de commande à l'appareil de formation d'images en couleurs.

7. Procédé de formation d'images dans un système de formation d'images comprenant :
un appareil de formation d'images en couleurs (120) et un appareil de traitement d'images (110) qui est connecté à l'appareil de formation d'images en couleurs, comprenant les étapes consistant à :
transformer des données-images couleur RGB en données-images couleur CMYK (K = 0) n'ayant aucune valeur K ;
envoyer les données à imprimer, incluant les données-images couleur CMYK (K = 0) n'ayant aucune valeur K, ainsi que les données à schéma en points pour former un schéma en points désigné par les seules valeurs K, à partir de l'appareil de traitement d'images vers l'appareil de formation d'images en couleurs ; et
imprimer les données à imprimer en provenance de l'appareil de traitement d'images, cas dans lequel les données-images couleur CMYK (K = 0) n'ayant aucune valeur K, sont imprimées en utilisant le développeur C, M et Y et sans utiliser le développeur K sur le support, alors que le schéma en points désigné par les seules valeurs K est imprimé en utilisant le développeur K sur le support;
cas dans lequel les données à schéma en points constituent un schéma en points prévu dans un intervalle prédéterminé avec une forme en grille et configuré de manière à être imprimé sur un support, cas dans lequel le schéma en points comprend des premiers, deuxièmes, troisièmes et quatrièmes points de base, chacun des points de base étant situé au niveau d'une position qui s'écarte légèrement d'un point de croisement entre des lignes de grille imaginaires orthogonales le long d'un sens de la longueur ou d'un sens de la largeur ; et
le schéma en points est configuré de sorte qu'une position absolue du schéma en points sur le support soit détectée lorsqu'un dispositif, qui comprend un mécanisme de lecture de schémas, lit le schéma en points;
**caractérisé par :** des premières données à codes de caractères servant à mapper les nombres 1 à 4 vers des premières données de police respectives correspondant aux premiers, deuxièmes, troisièmes ou quatrièmes points de base ; et
des deuxièmes données à codes de caractères servant à mapper les nombres 1 à 256 vers des deuxièmes données de police respectives correspondant à une combinaison de quatre points sélectionnés parmi les points de base et agencés suivant une grille de 2 par 2 ;
cas dans lequel l'appareil de formation d'images en couleurs reçoit les premières ou deuxièmes données de police ainsi qu'une combinaison prédéterminée de caractères numériques codés grâce à l'utilisation des premières ou deuxièmes données à codes de caractères respectives ; et
les caractères numériques correspondent à des positions sur le papier formant une grille, et le schéma en points est produit en mappant chacun des caractères numériques vers les données de police respectives grâce à l'utilisation des premières ou deuxièmes données à codes de caractères respectives.

8. Procédé de formation d'images selon la revendication 7, comprenant en outre l'opération consistant à :
réaliser une coloration de l'image en couleurs imprimée sur un support d'impression pour qu'elle ait approximativement une coloration d'une image affichée sur une unité d'affichage, grâce à l'utilisation d'un profil d'utilisation de l'approximation de la couleur ayant été stocké antérieurement.

9. Procédé de formation d'images selon la revendication 7 ou 8, comprenant en outre l'opération consistant à :
envoyer une commande pour empêcher la réalisation d'un processus de changement CMYK, effectué par l'appareil de formation d'images en couleurs, lors de l'envoi des données à imprimer à l'appareil de formation d'images en couleurs.

10. Procédé de formation d'images selon l'une quelconque des revendications 7 à 9, comprenant en outre l'opération consistant à :
recevoir une sélection Utilisateur pour déterminer si les premières ou les deuxièmes données à codes de caractères doivent être utilisées.
